# EUROPÄISCHE PATENTSCHRIFT

(11) **EP 0 928 890 B1**
(45) Veröffentlichungstag und Bekanntmachung des Hinweises auf die Patenterteilung: **16.06.2004**
(21) Anmeldenummer: 98123728.2
(22) Anmeldetag: 14.12.1998
(51) Int. Cl.: F02D 41/02, F01N 3/08, F01N 11/00

(54) **Verfahren zum Betreiben eines Stickoxid-Speicherkatalysators**
Method for operating a NOx storage catalyst
Procédé d'exploitation d'un catalyseur de stockage de NOx

(30) Priorität: 10.01.1998 DE 19800665
(43) Veröffentlichungstag der Anmeldung: 14.07.1999
(73) Patentinhaber: Umicore AG & Co. KG, 63457 Hanau-Wolfgang (DE)
(72) Erfinder: Höhne, Jürgen, 63457 Hanau (DE); Strehlau, Wolfgang Dr., 65538 Grosskrotzenburg (DE); Lox, Egbert Dr., 63457 Hanau (DE); Kreuzer, Thomas Dr., 61184 Karben (DE)
(74) Vertreter: Stellbrink, Axel

(56) Entgegenhaltungen:
- EP-A- 0 733 787
- EP-A- 0 735 250
- WO-A-97/31704
- BOSCH: "Kraftfahr technisches Taschenbuch" , KRAFTFAHR TECHNISCHES TASCHENBUCH BOSCH, DUESSELDORF: VDI-VERLAG, DE, PAGE(S) 491-493 XP002186215 ISBN: 3-18-419122-2

## Beschreibung

Die Erfindung betrifft ein Verfahren zum Betreiben eines Stickoxid-Speicherkatalysators mit zyklischem Wechsel von Luftzahlen des Abgases über 1 (Sorptionsphase) zu Luftzahlen unter 1 (Desorptions- und Umsetzungsphase) zur Reduktion der während der Sorptionsphase auf dem Katalysator gespeicherten und während der Desorptionsphase freigesetzten Stickoxide am Speicherkatalysator unter Verwendung der während der Desorptionsphase von einer Brennkraftmaschine emittierten reduktiven Abgasbestandteile.

Stickoxid-Speicherkatalysatoren wurden speziell für die Abgasreinigung von mager betriebenen Brennkraftmaschinen entwickelt. Zur Klasse der mager betriebenen Brennkraftmaschinen gehören mager betriebene Benzinmotoren, sogenannte Magermotoren, und Dieselmotoren. Magermotoren, insbesondere mit Benzin-Direkteinspritzung, werden zunehmend im Kraftfahrzeugbau eingesetzt, da sie eine theoretische Kraftstoffersparnis von bis zu 25% gegenüber stöchiometrisch betriebenen Brennkraftmaschinen ermöglichen.

Im Abgas von Brennkraftmaschinen finden sich als wesentliche Schadstoffe Kohlenmonoxid CO, unverbrannte Kohlenwasserstoffe HC und Stickoxide NOₓ. Darüber hinaus enthält das Abgas noch geringe Anteile an Wasserstoff. Durch moderne Abgasreinigungskatalysatoren können die Schadstoffe im stöchiometrischen Betrieb einer Brennkraftmaschine zu einem hohen Prozentsatz in die unschädlichen Komponenten Wasser, Kohlendioxid und Stickstoff umgesetzt werden. Die für die Abgasreinigung von stöchiometrisch betriebenen Brennkraftmaschinen entwickelten Katalysatoren werden als Dreiwegkatalysatoren bezeichnet.

Stöchiometrische Bedingungen liegen bei Luftzahlen λ von 1 vor. Bei der Luftzahl λ handelt es sich um das auf stöchiometrische Bedingungen normierte Luft/Kraftstoff-Verhältnis. Das Luft/Kraftstoff-Verhältnis gibt an, wieviel Kilogramm Luft für die vollständige Verbrennung von einem Kilogramm Kraftstoff benötigt werden. Bei üblichen Kraftstoffen liegt das stöchiometrische Luft/Kraftstoff-Verhältnis bei einem Wert von 14,6.

Der stöchiometrische Betrieb wird durch Regelung des der Brennkraftmaschine angebotenen Luft/Kraftstoff-Verhältnisses eingehalten. Zur Regelung dient das Signal eines Sauerstoffsensors, einer sogenannten Lambdasonde, die den Sauerstoffgehalt im Abgas der Brennkraftmaschine ermittelt. Zum Einsatz kommen hierfür überwiegend Lambdasonden mit Sprungcharakteristik, deren Sondensignal sich bei λ=1 sprunghaft ändert.

Wesentlich schwieriger ist die Reinigung des Abgases eines Magermotors, der während der überwiegenden Dauer seines Betriebs mit Luftzahlen größer als 1,3 arbeitet. Sein Abgas enthält etwa 3 bis 15 Vol.-% Sauerstoff. Es liegen also stark oxidierende Bedingungen im Abgas vor. Unter diesen Bedingungen können die Stickoxide im Abgas nicht mehr auf einfache Weise reduziert werden. Zur Lösung dieses Problems wurden unter anderem die erwähnten Stickoxid-Speicherkatalysatoren entwickelt. Die Regelung des Magerbetriebs erfolgt mit Lambdasonden, die eine lineare Abhängigkeit des Sondensignals vom Sauerstoffgehalt des Abgases aufweisen. Sie werden als Breitbandsonden bezeichnet. Die Funktionsweise von Sprungsonden und Breitbandsonden wird im Kraftfahrttechnischem Taschenbuch von Bosch, VDI-Verlag, 20. Auflage von 1995, Seiten 490-492, beschrieben.

Stickoxid-Speicherkatalysatoren besitzen die Fähigkeit, in einem weiten Temperaturbereich Stickoxide unter oxidierenden Abgasbedingungen, das heißt im Magerbetrieb zu speichern. Diese Betriebsphase wird daher im folgenden auch als Sorptionsphase bezeichnet. Da die Speicherkapazität eines Speicherkatalysators begrenzt ist, muß er von Zeit zu Zeit regeneriert werden. Hierzu wird die Luftzahl des dem Motor zugeführten Luft/Kraftstoff-Gemisches und damit auch die Luftzahl des den Motor verlassenden Abgases für kurze Zeit auf Werte unter 1 abgesenkt. Dies wird auch als Anfettung des Luft/Kraftstoff-Gemisches oder des Abgases bezeichnet. Während dieser kurzen Betriebsphase liegen also im Abgas vor Eintritt in den Speicherkatalysator reduzierende Bedingungen vor.

Unter den reduzierenden Bedingungen während der Anfettungsphase werden die gespeicherten Stickoxide freigesetzt und am Speicherkatalysator unter gleichzeitiger Oxidation von Kohlenmonoxid, Kohlenwasserstoffen und Wasserstoff wie bei konventionellen Dreiwegkatalysatoren zu Stickstoff reduziert. Diese Betriebsphase des Speicherkatalysators wird im folgenden auch als Desorptions- und Umsetzungsphase bezeichnet. Bei korrekter Funktion des Gesamtsystems aus Speicherkatalysator, Sauerstoffsensoren und Motorelektronik liegen hinter dem Speicherkatalysator während der Desorptionsphase in etwa stöchiometrische Bedingungen vor, das heißt die vor dem Speicherkatalysator während der Desorptionsphase im Überschuß vorliegenden Kohlenwasserstoffe und Kohlenmonoxid werden am Speicherkatalysator durch die freigesetzten Stickoxide oxidiert.

Ein solches Verfahren zum Betrieb eines Speicherkatalysators ist schon aus der EP 0 560 991 B1 und der EP 0 597 106 A1 bekannt. Die Dauer der Sorptionsphase beträgt gemäß diesen Dokumenten mehr als das Fünfzigfache der Dauer der Desorptions- und Umsetzungsphase. Sorptions- und Desorptionsphase werden durch entsprechende Steuerung des Luft/Kraftstoff-Verhältnisses eingeleitet. Während der Sorptions- und Desorptionsphase kann gemäß der EP 0 560 991 das Luft/Kraftstoff-Verhältnis mittels eines Sensors für das Luft/Kraftstoff-Verhälnis geregelt werden. Dieser Sensor ist vor dem Speicherkatalysator im Abgasstrang des Verbrennungsmotors angeordnet. Die vom Speicherkatalysator adsorbierte Menge an Stickoxidverbindungen wird in Abhängigkeit von der angesaugten Luft und der Motorlast berechnet. Nach Überschreiten einer vorgegebenen Grenzmenge der vom Speicherkatalysator gespeicherten Stickoxidverbindungen wird der Brennkraftmaschine ein fettes Gemisch zur Desorption der Stickoxidverbindungen zugeführt. Die Dauer der Desorptionsphase weist einen voreingestellten Wert zwischen 5 und 20 Sekunden auf.

Die WO 97/31704 beschreibt ein Verfahren zur Regeneration eines Stickoxid-Speicherkatalysators, wobei abhängig vom Betriebszustand des Stickoxid-Speicherkatalysators eine Regenerationsphase gestartet wird, bei der ein Kraftstoffgemisch mit einer Luftzahl kleiner 1 der Brennkraftmaschine zugeführt wird. Die Regenerationsphase wird eingeleitet, wenn der Betriebszustand des Speicherkatalysators mindestens einer Grenzmenge von Stickoxidverbindungen entspricht, die vom Speicherkatalysator ausgegeben wird. Die Alterung des Speicherkatalysators wird durch eine Korrektur des Speicherwirkungsgrades in Abhängigkeit von der Anzahl der bereits durchgeführten Regenerationsphasen korrigiert.

Die EP 0 690 213 A1 beschreibt ebenfalls ein Abgasreinigungssystem, welches einen Stickoxid-Speicherkatalysator enthält. Das Abgasreinigungssystem ermöglicht es, die mit zunehmender Alterung des Speicherkatalysators sich vermindernde Speicherkapazität zu bestimmen. Hierzu wird die Sauerstoffkonzentration des Abgases hinter dem Speicherkatalysator mit einem Sauerstoffsensor gemessen, der ein lineares Signal in Abhängigkeit von der Sauerstoffkonzentration im Abgas liefert. Zur Desorption der Stickoxide wird das der Brennkraftmaschine zugeführte Luft/Kraftstoffgemisch während einer fest vorgegebenen Zeitdauer angefettet. Während dieser Zeitdauer ist das Abgas hinter dem Speicherkatalysator zunächst stöchiometrisch zusammengesetzt, da die reduktiven Komponenten des fetten Abgases durch die vom Speicherkatalysator freigesetzten Stickoxide kompensiert werden. Sind alle Stickoxide desorbiert, so sinkt die Luftzahl des Abgases hinter dem Speicherkatalysator und der lineare Sauerstoffsensor liefert ein entsprechendes Signal. Der Spitzenwert dieses Signals während der Desorptionsphase macht eine Aussage über die Speicherkapazität des Katalysators.

Die EP 0 735 250 A2 beschreibt ein weiteres Abgasreinigungssystem mit einem Stickoxid-Speicherkatalysator. Zur Bestimmung der Verschlechterung der Speicherkapazität des Katalysators ist hinter dem Speicherkatalysator ein linearer Sauerstoffsensor angeordnet. Er dient während der Anfettung des Luft/Kraftstoff-Gemisches zur Bestimmung der auf dem Speicherkatalysator gespeicherten Menge Sauerstoff. Die Stickoxid-Speicherkapazität des Speicherkatalysators kann unter Verwendung dieser Sauerstoffmenge ermittelt werden.

Aufgabe der vorliegenden Erfindung ist es, ein vereinfachtes Verfahren zum Betreiben eines Stickoxid-Speicherkatalysators sowie zur Erkennung einer permanenten Schädigung seiner Speicherfähigkeit anzugeben um den zukünftigen Anforderungen einer "on board diagnostic", kurz OBD genannt, gerecht zu werden. Das Verfahren soll eine Kompensation der langsam fortschreitenden Schädigung der Speicherfähigkeit ermöglichen und das Unterschreiten einer gewissen Mindestspeicherfähigkeit des Katalysators anzeigen, die einen Austausch des Katalysators erforderlich macht.

Diese Aufgabe wird gelöst durch ein Verfahren zum Betreiben eines Stickoxid-Speicherkatalysators mit zyklischem Wechsel von Luftzahlen des Abgases über 1 (Sorptionsphase) zu Luftzahlen unter 1 (Desorptions- und Umsetzungsphase) zur Reduktion der während der Sorptionsphase auf dem Katalysator gespeicherten und während der Desorptionsphase freigesetzten Stickoxide am Speicherkatalysator unter Verwendung der während der Desorptionsphase von einer Brennkraftmaschine emittierten reduktiven Abgasbestandteile.

Das Verfahren umfaßt die folgenden Schritte:
a) rechnerische Integration der auf dem Speicherkatalysator während der Sorptionsphase bei einer Luftzahl größer als 1 theoretisch adsorbierenden Menge M an Stickoxiden über der Zeit unter Verwendung der in der Motorelektronik hinterlegten temperaturabhängigen Speicherkapazität des Katalysators und der ebenfalls in der Motorelektronik hinterlegten Menge der Stickoxide, welche in jedem Betriebspunkt des Motors (Drehmoment, Drehzahl, Luftzahl) emittiert wird,
b) Absenken der Luftzahl zur Desorption und Umsetzung der Stickoxide auf einen Wert unter 1 nach Erreichen eines Zielwertes für die mit einem Korrekturfaktor K multiplizierte, theoretisch gespeicherte Menge M an Stickoxiden (K.M), wobei der Korrekturfaktor nach dem Neustart der Brennkraftmaschine aus der Motorelektronik entnommen und während des kontinuierlichen Betriebs der Brennkraftmaschine in Schritt e) ständig aktualisiert wird,
c) Berechnen der erwarteten Dauer der Desorptionsphase T_{D} aus dem Zielwert für die gespeicherten Stickoxide und dem im Abgasreinigungssystem gespeicherten Sauerstoff unter Berücksichtigung der Reaktionsstöchiometrie bei der Reduktion der Stickoxide mit Wasserstoff, Kohlenmonoxid und Kohlenwasserstoffen zu Wasser, Kohlendioxid und Stickstoff und dem in der Motorelektronik für den augenblicklichen Betriebspunkt hinterlegten Abgasmassenstrom, der Temperatur und dem Gehalt an reduktiven Abgaskomponenten,
d) Überwachen der Luftzahl λ des Abgases hinter dem Speicherkatalysator während der Desorptionsphase und Messen der Desorptionsdauer T, nach der die Luftzahl unter einen vorgegebenen Grenzwert absinkt und erneutes Umschalten auf Luftzahlen über 1 oder Übergang zu einem anderen Betriebszustand,
e) Berechnen des unter Schritt b) verwendeten Korrekturfaktors K als Verhältnis aus der erwarteten Desorptionsdauer T_{D} und der gemessenen Desorptionsdauer T (K=T_{D}/T) und
f) zyklische Wiederholung der vorangegangenen Verfahrensschritte.

Für das Verfahren sind die aus dem Stand der Technik bekannten Speicherkatalysatoren geeignet. Sie bestehen in der Regel aus einem hochoberflächigem Aluminiumoxid als Trägermaterial, auf dem wenigstens eine Verbindung aus der Gruppe eines Alkalimetalls (zum Beispiel Kalium, Natrium, Lithium und Cäsium), eines Erdalkalimetalls (zum Beispiel Barium und Kalzium) und eines Seltenerdmetalls (zum Beispiel Lanthan) aufgebracht ist. Bevorzugt wird Bariumoxid als Speicherkomponente verwendet, welches die Stickoxide in Form von Bariumnitrat speichert. Als katalytisch aktive Komponente zur Oxidation von NO zu NO₂ während der Sorptionsphase und zur Reduktion von NO₂ zu N₂ während der Desorptions- und Umsetzungsphase wird bevorzugt Platin, gegebenenfalls in Kombination mit Palladium, Rhodium und/oder Iridium, verwendet. Die katalytisch aktiven Komponenten werden ebenfalls auf dem Trägermaterial in hochdisperser Form in enger Nachbarschaft zu den Speicherkomponenten aufgebracht.

Das Verfahren geht von einer modernen Brennkraftmaschine aus, deren Betrieb durch eine sogenannte Motorelektronik geregelt wird. Eine solche Motorelektronik weist elektronische Datenspeicher auf, in denen Kennlinienfelder für die Betriebszustände der Brennkraftmaschine hinterlegt sind. Die Formulierung "hinterlegt" wird hier für die in der Motorelektronik elektronisch abgespeicherten Daten verwendet, um eine deutliche Unterscheidung zu den im Abgassystem ablaufenden chemischen und physikalischen Speichervorgängen zu schaffen.

Die für die Durchführung des Verfahrens erforderlichen Daten zum Speicherverhalten des frischen Speicherkatalysators in Abhängigkeit von der Temperatur sowie zur Abgaszusammensetzung in Abhängigkeit vom jeweiligen Betriebszustand des Motors werden vorab bestimmt und ebenfalls in Form von Kennlinienfeldern des Katalysators in der Motorelektronik hinterlegt.

Hierzu wird die Aufnahmefähigkeit des frischen Stickoxid-Speicherkatalysators über sämtliche Temperaturbereiche, die im Betrieb des Motors vorkommen, genau ermittelt. Es wird also für jeden Betriebspunkt des Motors, der durch Drehmoment, Drehzahl, Abgasmassenstrom, Abgastemperatur und Stickoxidkonzentration im Abgas gekennzeichnet ist, die auf dem Katalysator gespeicherte Stickoxidmenge gemessen und in der Motorelektronik hinterlegt.

Die hinterlegten Daten ermöglichen es der Motorelektronik, die auf dem Speicherkatalysator gespeicherten Stickoxide rechnerisch über die vergangenen Betriebszustände des Motors zu integrieren und bei Erreichen eines vorgegebenen Zielwertes die Desorptions- und Umsetzungsphase durch Umschalten auf fette Abgasbedingungen einzuleiten. Die notwendige Dauer der Desorptionsphase wird unter Berücksichtigung der Reaktionsstöchiometrie (NOₓ+H₂**+**CO+HC ⇒ H₂O**+**CO₂**+**N₂) vorausberechnet.

Mit dem Zielwert für die Speicherkapazität von Schritt b) ist der für die Erreichung eines geforderten Stickoxidumsatzes nutzbare Teil der Speicherkapazität gemeint. Dieser Zielwert oder, mit anderen Worten, die nutzbare Speicherkapazität, liegt unterhalb der maximalen Speicherkapazität des Katalysators. Um einen bestimmten Stickoxidumsatz zu garantieren, kann nämlich die maximale Speicherkapazität des Katalysators nicht voll genutzt werden, da sich die Geschwindigkeit der Abspeicherung der Stickoxide mit zunehmender Beladung des Speicherkatalysators vermindert. Die Speicherphase muß daher schon beendet werden, bevor die gesamte Speicherkapazität erschöpft ist. Die nutzbare Speicherkapazität des Katalysators hängt daher von dem gewünschten Stickoxidumsatz ab. Darüber hinaus ist die nutzbare Speicherkapazität auch abhängig vom Betriebspunkt des Motors. Die für jeden Motorbetriebspunkt nutzbare Speicherkapazität kann vorab bestimmt und in der Motorelektronik zur Verwendung im erfindungsgemäßen Verfahren hinterlegt werden. Der Einfachheit halber kann aber statt der für jeden Betriebspunkt in der Motorelektronik hinterlegten nutzbaren Speicherkapazität (Zielwerte) auch ein vorab bestimmter, fester Wert verwendet werden, der unterhalb der maximalen Speicherkapazität des Speicherkatalysators liegt und einen gewünschten Stickoxidumsatz garantiert.

Nach Erreichen des Zielwertes wird der Betrieb des Motors auf Luftzahlen unter 1 umgeschaltet. Hierdurch wird die Desorption der Stickoxide und ihre Umsetzung am Speicherkatalysator eingeleitet. Während die Sorptionsphase eine Dauer in der Größenordnung von einer Minute umfaßt, liegt die Dauer der Desorptionsphase nur im Sekundenbereich. Ihre Dauer T_{D} wird von der Motorelektronik vorausberechnet. In diese Berechnung geht die unter Schritt a) berechnete Menge der auf dem Speicherkatalysator adsorbierten Stickoxide, die Reaktionsstöchiometrie und der für den augenblicklichen Betriebspunkt hinterlegte Abgasmassenstrom, die Temperatur des Abgases und der Gehalt des Abgases an reduktiven Komponenten (Kohlenmonoxid, Kohlenwasserstoffe, Wasserstoff) ein. Eine weitere Größe, die hierbei berücksichtigt werden muß, ist die im Abgassystem während der Sorptionsphase (sauerstoffreiches Abgas) gespeicherte Menge Sauerstoff. Eine Speicherung des Sauerstoffs kann zum Beispiel an sogenannten Sauerstoffspeicherkomponenten der Katalysatorbeschichtung erfolgen. Bei diesen Komponenten handelt sich überwiegend um Materialien auf der Basis von Ceroxid.

Infolge der Alterung des Katalysators sowie durch altersbedingte Verschiebungen im Kennlinienfeld des Motors ergeben sich Fehler bei der Berechnung der notwendigen Dauer der Desorptionsphase. Ist die berechnete Zeit zu kurz, so werden nicht alle gespeicherten Stickoxide von der Katalysatoroberfläche entfernt und die Umsatzrate für die Stickoxide sinkt. Bei zu langer Desorptionsphase kommt es zu Durchbrüchen von Kohlenwasserstoffen und Kohlenmonoxid hinter dem Speicherkatalysator, da die notwendige Menge der freigesetzten Stickoxide als Oxidationsmittel fehlt. Die Luftzahl hinter dem Speicherkatalysator weist in diesem Fall zunächst einen Wert nahe 1 auf und nimmt zum Ende der Desorptionsphase Werte kleiner als 1 an. Die Zeitdauer T nach der die Luftzahl hinter dem Speicherkatalysator einen vorher festgelegten Grenzwert unterschreitet wird von der Motorelektronik gemessen und zur Berechnung des in Schritt a) benötigten Korrekturfaktors K herangezogen. Der Korrekturfaktor K ist gleich dem Quotienten aus der theoretischen Desorptionsdauer T_{D} und der gemessenen Desorptionsdauer T (K=T_{D}/T).

Wurde die Desorptionsdauer zu gering berechnet, wurde also die gespeicherte Menge an Stickoxiden unterschätzt, so ergibt sich ein Korrekturfaktor kleiner als 1. Die Multiplikation von K mit der während der nächsten Sorptionsphase rechnerisch integrierten Menge M an gespeicherten Stickoxiden führt dazu, daß der Zielwert für K·M erst später erreicht wird. Die Sorptionsphase verlängert sich also. Es werden mehr Stickoxide gespeichert.

Wegen der Alterung des Speicherkatalysators wird jedoch in der Regel die gemessene Desorptionsdauer kürzer sein als die berechnete Desorptionsdauer. In diesem Fall wird ein Korrekturfaktor größer als 1 erhalten, was dazu führt, daß die Sorptionsphase während des nächsten Speicherzyklus kürzer ausfällt und somit die alterungsbedingte Verringerung der Speicherkapazität des Katalysators berücksichtigt wird.

Zur Vermeidung übermäßiger Kohlenwasserstoffemissionen wird die Desorptionsphase nach Unterschreiten des vorgegebenen Grenzwertes für die Luftzahl hinter dem Speicherkatalysator durch Umschalten des der Brennkraftmaschine zugeführten Luft/Kraftstoff-Gemisches auf ein mageres Gemisch (Luftzahl größer 1) abgebrochen und der nächste Speicherzyklus begonnen. Während also gemäß der EP 0 690 213 A1 bewußt Kohlenwasserstoffemissionen während der Desorptionsphase in Kauf genommen werden, um die verminderte Speicherkapazität des Katalysators zu bestimmen, kommt das vorgeschlagene Verfahren ohne solche Emissionen aus. Die verminderte Speicherkapazität wird vielmehr durch eine einfache Zeitmessung ermittelt. Darüber hinaus ist für diese Zeitmessung eine relativ preiswerte Sprungsonde ausreichend, da nur der Zeitpunkt des Erreichens eines vorgegebenen Grenzwertes der Luftzahl bestimmt werden muß. Dagegen wird gemäß der EP 0 690 213 A1 eine teure Breitbandsonde zur genauen Messung der Amplitude des Spitzenwertes der Luftzahl während der festen Dauer der Desorptionsphase benötigt.

Der vorgegebene Grenzwert für die Luftzahl hinter dem Speicherkatalysator wird zweckmäßigerweise aus dem Intervall zwischen 1 und 0,95 gewählt. Zur Minimierung der Kohlenwasserstoffemissionen sollte der Grenzwert allerdings so nahe wie möglich beim stöchiometrischen Wert liegen. Gelegentliche Fehlabschaltungen können dabei in Kauf genommen werden, da sie keinen dauerhaft negativen Einfluß auf das Verfahren haben, sondern durch die gewählte Art der Ermittlung des Korrekturfaktors automatisch ausgeglichen werden.

Wie vorstehend beschrieben, ist das vorgeschlagene Verfahren in der Lage, die Stickoxidverminderung im Abgas sowohl kurzfristig zu regeln als auch langfristige Schäden der Speicherkapazität des Katalysators zu kompensieren.

Die Speicherkapazität des Speicherkatalysators kann sowohl reversibel als auch permanent geschädigt werden. Eine permanente Schädigung des Katalysators tritt bei thermischer Überlastung ein. Temperaturen von mehr als 700°C führen zu einer irreversiblen Verminderung der spezifischen Oberfläche der Speicherkomponenten sowie der katalytisch aktiven Edelmetallkomponenten und damit zu einer Verminderung der Speicherkapazität.

Der im Kraftstoff enthaltene Schwefel verursacht dagegen eine reversible Schädigung durch Einlagerung des Schwefels in Form von Sulfaten. Die in Sulfate überführten Speicherkomponenten stehen nicht mehr für die Speicherung der Stickoxide zur Verfügung. Diese Verminderung der Stickoxid-Speicherkapazität kann jedoch durch eine Temperaturbehandlung zwischen 600 und 700°C wieder rückgängig gemacht werden. In diesem Temperaturbereich zerfallen die Sulfate, ohne daß dabei der Katalysator permanent geschädigt würde. Die hier angeführten Temperaturbereiche sind nur als Richtwerte zu verstehen und können je nach der Zusammensetzung des Speicherkatalysators in gewissen Grenzen variieren.

Mit zunehmender Schädigung des Katalysators steigt der Korrekturfaktor an. Dies kann ausgenutzt werden, um bei Überschreiten eines vorgegebenen Grenzwertes für den Korrekturfaktor, ein Signal zum Austausch des Katalysators auszugeben. Da die Schädigung des Katalysators durch adsorbierte Schwefelkomponenten zum Teil reversibel ist, kann alternativ nach Überschreiten des Grenzwertes zunächst eine thermische Desorption der Schwefelkomponenten bei Temperaturen über 600°C und Luftzahlen zwischen 0,95 und 1 für eine vorgegebene Zeitdauer versucht werden. Erhöht sich dadurch die Speicherfähigkeit des Katalysators wieder, so wird der Katalysator danach wie gewohnt betrieben. Ergibt die thermische Desorption keine Verringerung des Korrekturfaktors, das heißt keine Verbesserung der Speicherfähigkeit, so kann ein Signal zum Austausch des Katalysators gesetzt werden.

Nach Abschalten der Brennkraftmaschine kann der letzte bestimmte Korrekturfaktor K in der Motorelektronik zur Verwendung nach erneutem Start der Maschine hinterlegt werden.

Die Dauer der Desorptionsphase hängt von der Luftzahl des Abgases vor dem Speicherkatalysator ab. Vorteilhaft sind Luftzahlen zwischen 0,6 und 1. Bei einer Luftzahl von 0,6 ist die Desorptionsdauer am kürzesten und verlängert sich mit Annäherung der Luftzahl an den stöchiometrischen Wert. Bevorzugt wird die Luftzahl vor dem Speicherkatalysator während der Desorption auf einen Wert aus dem Bereich zwischen 0,7 und 0,9 eingeregelt, um eine Desorptionsdauer von wenigen Sekunden zu erhalten. Für die Regelung der Luftzahl zwischen 0,6 (Minimalwert während der Desorption) und etwa 3 (Maximalwert während der Sorptionsphase) kann eine Breitband-Lambdasonde verwendet werden.

Die Abgaszusammensetzung hinter dem Speicherkatalysator kann während der Desorptionsphase auf verschiedene Weise ermittelt werden. Bevorzugt wird eine Sprung-Lambdasonde verwendet, die eine preiswerte Möglichkeit darstellt, um das Erreichen des vorgegebenen Grenzwertes für die Luftzahl auf einfache Weise zu bestimmen. Wie weiter unten erläutert wird, kann dies am Erreichen eines vorher festgelegten Abschaltwertes der Sprung-Lambdasonde festgestellt werden.

Alternativ kann auch mit einem Sensor für die reduktiven Abgaskomponenten gearbeitet werden, das heißt also mit einem Sensor für Kohlenwasserstoffe oder einem Sensor für Kohlenmonoxid. Die Desorptionsphase wird in diesem Fall ebenfalls abgebrochen, wenn ein vorher festgelegter Abschaltwert erreicht wird.

Das beschriebene Verfahren kommt zur Anwendung, wenn die Brennkraftmaschine nach Erreichen des betriebswarmen Zustandes mit Abgastemperaturen oberhalb 150 bis 200°C im Teillastbereich betrieben wird. Unterhalb der genannten Abgastemperaturen ist die Speicherfähigkeit der Speicherkatalysatoren gering, so daß während dieser Betriebsphasen, das erfindungsgemäße Verfahren nicht zur Anwendung kommen kann. Bei Vollast wird auch bei mager betriebenen Brennkraftmaschinen auf stöchiometrische oder fette Luft/Kraftstoff-Gemische umgeschaltet, um die volle Leistungsfähigkeit der Maschine nutzen zu können. Auch in diesen Betriebsphasen ist das erfindungsgemäße Verfahren daher nicht anwendbar.

Zur weiteren Erläuterung des Verfahrens dienen die Figuren 1 bis 3. Es zeigen:
- **Figur 1:**: Schematische Darstellung des zeitlichen Verlaufs der Stickoxidsorption und -desorption bei Betrieb des Speicherkatalysators nach dem erfindungsgemäßen Verfahren
- **Figur 2:**: Luftzahl des Abgases vor dem Speicherkatalysator während der Sorptions- und Desorptionsphasen
- **Figur 3:**: Sondensignale vor und hinter dem Speicherkatalysator in Abhängigkeit von der Zeit

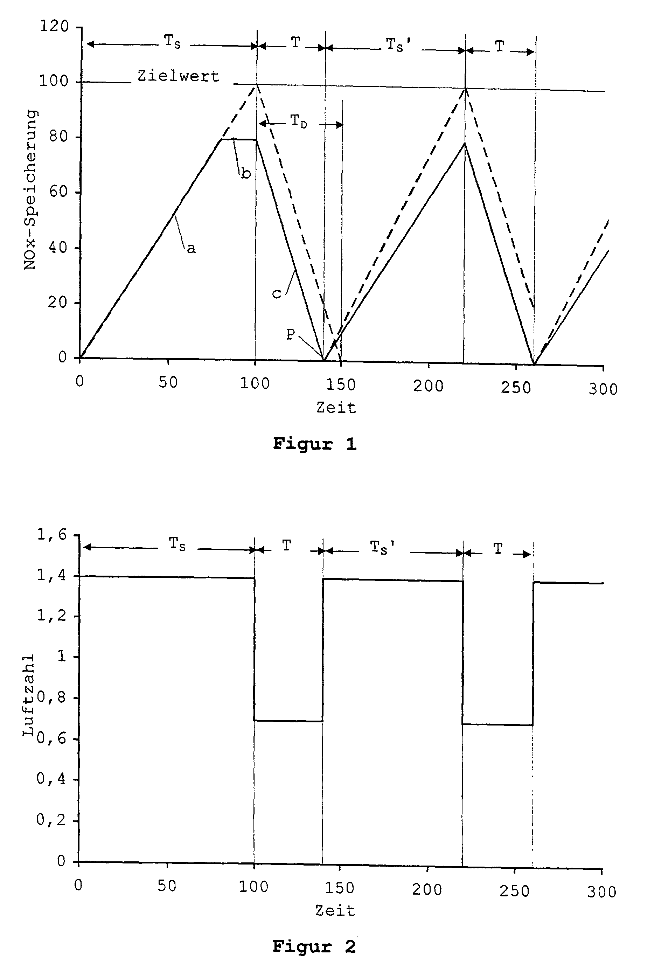

Figur 1 zeigt schematisch den zeitlichen Verlauf der Stickoxidsorption und -desorption während des Betriebs des Speicherkatalysators gemäß dem vorgeschlagenen Verfahren und Figur 2 zeigt die Luftzahlen des Abgases vor dem Speicherkatalysator während der Sorptions- und Desorptionsphasen. In Figur 1 ist der Zielwert für die abzuspeichernde Menge an Stickoxiden durch eine horizontale Linie dargestellt. Der theoretische Verlauf der abgespeicherten Stickoxide ist gestrichelt dargestellt, während der tatsächliche Verlauf durch eine durchgezogene Linie wiedergegeben wird.

Ohne eine Abspeicherung des Korrekturfaktors beim letzten Betrieb der Brennkraftmaschine beginnt das Verfahren zunächst mit einem Korrekturfaktor von 1, das heißt es wird ein nicht geschädigter Speicherkatalysator mit seiner ursprünglichen Speicherkapazität angenommen.

Während der ersten Sorptionsphase mit der Dauer T_{S} wird die Luftzahl vor dem Speicherkatalysator zum Beispiel auf einen Wert von 1,4 eingeregelt. Die rechnerisch bestimmte Menge der abgespeicherten Stickoxide stimmt zu Beginn der Sorptionsphase in etwa mit der tatsächlich abgespeicherten Menge überein (Kurvenstück a in Figur 1).

Aufgrund einer vorherigen Schädigung der Speicherkapazität ist die maximal abzuspeichernde Menge an Stickoxiden jedoch schon auf einen Wert unterhalb des angenommenen Zielwertes begrenzt. Die tatsächlich abgespeicherte Menge wächst daher nicht über diesen Maximalwert an (Kurvenstück b), obwohl die Sorptionsphase noch nicht beendet ist. Erst wenn der rechnerische Wert der abgespeicherten Stickoxide den Zielwert erreicht, wird auf reduzierendes Abgas mit einer Luftzahl von zum Beispiel 0,7 umgeschaltet.

Aus der theoretisch abgespeicherten Menge der Stickoxide (Zielwert) berechnet sich unter Berücksichtigung der Reaktionsstöchiometrie und dem in der Motorelektronik für den augenblicklichen Betriebspunkt hinterlegten Abgasmassenstrom, der Temperatur des Abgases und dem Gehalt des Abgases an reduktiven Abgaskomponenten die theoretische Desorptionsdauer T_{D}, die für eine vollständige Desorption der theoretisch abgespeicherten Stickoxide ausreicht. Während der Desorption weist die Luftzahl hinter dem Speicherkatalysator zunächst nahe bei 1 liegende Werte auf. Da die tatsächlich abgespeicherte Menge der Stickoxide jedoch geringer als theoretisch erwartet ist, wird die vollständige Desorption schon vor Ablauf der theoretisch erwarteten Desorptionsdauer erreicht. Die Desorption der tatsächlich abgespeicherten Stickoxide (Kurvenstück c) ist in Punkt P von Figur 1 abgeschlossen.

Bei weiter andauerndem Betrieb der Brennkraftmaschine mit fetten Abgasbedingungen vor dem Speicherkatalysator brechen die Kohlenwasserstoffe und Kohlenmonoxid durch den Speicherkatalysator durch. Dies geschieht, weil die im Katalysator gespeicherten Stickoxide und gegebenenfalls Sauerstoff für die Oxidation der Kohlenwasserstoffe und Kohlenmonoxid verbraucht wurden. Der Zeitpunkt des Durchbruchs kann zum Beispiel mit einer Sprung-Lambdasonde relativ einfach bestimmt werden. Das Signal der Lambdasonde wird zum erneuten Umschalten auf magere Abgasbedingungen oder einen anderen Betriebszustand (zum Beispiel Beschleunigung) verwendet, das heißt die Desorptionsphase wird vorzeitig unterbrochen. Außerdem wird die Zeitdauer T bis zum Absinken der Luftzahl unter 1 von der Motorelektronik registriert und zur Berechnung des Korrekturfaktors K=T_{D}/T für den nächsten Speicherzyklus verwendet. Der Korrekturfaktor ist in diesem Fall größer als 1.

Beim nächsten Speicherzyklus wird die theoretisch berechnete Menge der abgespeicherten Stickoxide M mit dem Korrekturfaktor K multipliziert. Das Produkt K·M wird mit dem Zielwert verglichen (gestrichelte Linie in Figur 1). Es wächst um den Faktor K schneller als die Menge der tatsächlich abgespeicherten Stickoxide. Die Dauer T_{S}' der neuen Sorptionsphase ist daher kürzer als die erste Phase. Sie ist im Idealfall gerade dann beendet, wenn die Aufnahmekapazität des geschädigten Katalysators erreicht ist. Dann beginnt wieder die Desorptionsphase. Auch bei allen weiteren Desorptionsphasen wird jeweils die tatsächliche Dauer der Desorptionsphase gemessen und durch Bildung des Quotienten T_{D}/T jeweils der neue Korrekturfaktor K berechnet. Tritt über weite Strecken des Betriebes keine weitere Schädigung des Katalysators auf, so bleibt der Korrekturfaktor konstant.

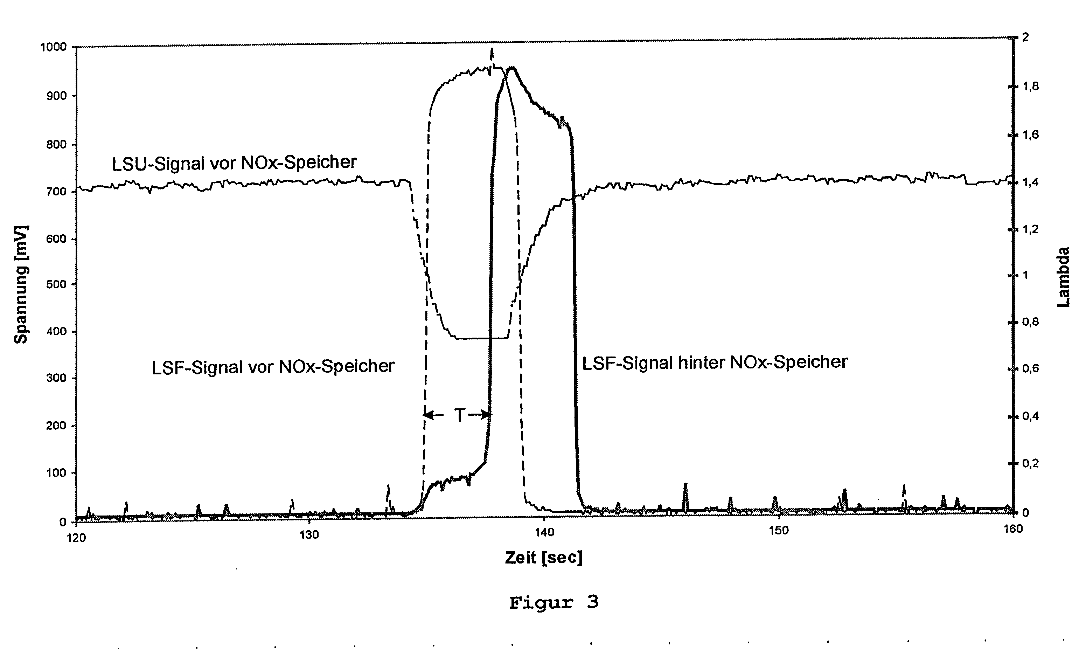

Figur 3 zeigt die an einem realen Abgassystem gemessenen Verhältnisse. Das Abgassystem ist mit drei Lambdasonden ausgerüstet, einer linearen Sonde "LSU" und zwei Sprung-Lambdasonden "LSF". Die lineare Sonde befindet sich im Abgassystem vor dem Speicherkatalysator. Ihr Signal ist in Figur 3 mit "LSU-Signal vor NOx-Speicher" bezeichnet. Die Sprung-Lambdasonden sind vor und hinter dem Speicherkatalysator angeordnet.

Figur 3 zeigt die Signalverläufe der drei Sonden vor, während und nach einer Desorptionsphase. Wegen der Linearität ihres Signals ist das Signal der linearen Lambdasonde in Figur 3 direkt in Luftzahlen Lambda umgerechnet. Die Signale der Sprung-Lambdasonden sind in Spannungswerten angegeben.

Die folgenden Erläuterungen erfolgen ohne Berücksichtigung der Gaslaufzeiten im Abgassystem. In Figur 3 hat die Luftzahl Lambda während der Sorptionsphase zwischen 120 und 134 Sekunden den Wert λ = 1,4. Bei 134 Sekunden erfolgt von der Motorelektronik die Umschaltung auf eine fette Abgaszusammensetzung mit einer Luftzahl von λ = 0,8. Der Übergang vom mageren zum fetten Abgas dauert wegen der Trägheit des Gesamtsystems etwa 2 Sekunden. Bei Unterschreiten einer bestimmten Luftzahl springt das Signal der Sprung-Lambdasonde vor dem Speicherkatalysator innerhalb von weniger als 0,3 Sekunden von 0 auf einen Spannungswert von über 800 mV und zeigt damit fettes Abgas an. Die Sprung-Lambdasonde hinter dem Speicherkatalysator folgt der Sprung-Lambdasonde vor dem Speicherkatalysator erst mit einer Verzögerung T von etwa 2,7 Sekunden, da das Abgas hinter dem Speicherkatalysator infolge der Desorption der Stickoxide und von Sauerstoff und Umsetzung mit den Kohlenwasserstoffen und Kohlenmonoxid zunächst mager bleibt.

In Figur 3 wurde das Abgas nach einer Dauer von 4,3 Sekunden wieder von fett nach mager zurückgeschaltet. Da es sich in Figur 3 nur um Meßkurven zur Demonstration der Vorgänge vor und hinter dem Speicherkatalysator handelt, entspricht diese Dauer nicht der optimalen Desorptionsdauer. Zur Vermeidung von Kohlenwasserstoff- und Kohlenmonoxid-Durchbrüchen durch den Speicherkatalysator muß die Umschaltung des Abgases von fett nach mager vorgenommen werden, wenn das Signal der Sprung-Lambdasonde hinter dem Speicherkatalysator einen vorher festgelegten Abschaltwert erreicht oder überschreitet. In Figur 3 liegt der optimale Abschaltwert zwischen 100 und 800, bevorzugt zwischen 100 und 200 mV. Der hier eingeführte Begriff des Abschaltwertes bezeichnet das Signal der Sprung-Lambdasonde bei Erreichen des Grenzwertes der Luftzahl für die Umschaltung von fett nach mager zwecks Abbruch der Desorptionsphase.

Der optimale Abschaltwert hängt vom Motortyp, der verwendeten Sonde und vom Abgassystem ab und kann vom Fachmann leicht durch entsprechende Messungen ermittelt werden.

Für die Durchführung der Messungen von Figur 3 wurde ein Abgassystem mit drei Lambdasonden ausgerüstet. Das erfindungsgemäße Verfahren kann jedoch auch nur mit einer einzigen Lambdasonde hinter dem Speicherkatalysator betrieben werden. Anstelle des Zeitversatzes zwischen den Signalen der beiden Sprungsonden vor und hinter dem Speicherkatalysator wird dann die Desorptionsdauer T als Zeitdauer zwischen dem Umschalten der Motorelektronik von mager nach fett und dem Erreichen des Abschaltwertes der Sprung-Lambdasonde hinter dem Speicherkatalysator ermittelt. Diese Zeit setzt sich aus der Laufzeit des Abgases bis zum Speicherkatalysator und der eigentlichen Desorptionsdauer zusammen.

Die Desorptionsdauer T wird von der Motorelektronik unter Berücksichtigung der Laufzeit des Abgases bestimmt und zur Berechnung des Korrekturfaktors K=T_{D}/T für den nächsten Speicherzyklus verwendet.

## Patentansprüche

1. Verfahren zum Betreiben eines Stickoxid-Speicherkatalysators mit zyklischem Wechsel von Luftzahlen des Abgases über 1 (Sorptionsphase) zu Luftzahlen unter 1 (Desorptions- und Umsetzungsphase) zur Reduktion der während der Sorptionsphase auf dem Katalysator gespeicherten und während der Desorptionsphase freigesetzten Stickoxide am Speicherkatalysator unter Verwendung der während der Desorptionsphase von einer Brennkraftmaschine emittierten reduktiven Abgasbestandteile, wobei das Verfahren die folgenden Schritte umfaßt:
a) rechnerische Integration der auf dem Speicherkatalysator während der Sorptionsphase bei einer Luftzahl größer als 1 theoretisch adsorbierenden Menge M an Stickoxiden über der Zeit unter Verwendung der in der Motorelektronik hinterlegten temperaturabhängigen Speicherkapazität des Katalysators und der ebenfalls in der Motorelektronik hinterlegten Menge der Stickoxide, welche in jedem Betriebspunkt des Motors (Drehmoment, Drehzahl, Luftzahl) emittiert wird,
b) Absenken der Luftzahl zur Desorption und Umsetzung der Stickoxide auf einen Wert unter 1 nach Erreichen eines Zielwertes für die mit einem Korrekturfaktor K multiplizierte, theoretisch gespeicherte Menge M an Stickoxiden (K·M), wobei der Korrekturfaktor nach dem Neustart der Brennkraftmaschine aus der Motorelektronik entnommen und während des kontinuierlichen Betriebs der Brennkraftmaschine in Schritt e) ständig aktualisiert wird,
c) Berechnen der erwarteten Dauer der Desorptionsphase T_{D} aus dem Zielwert für die gespeicherten Stickoxide und dem im Abgasreinigungssystem gespeicherten Sauerstoff unter Berücksichtigung der Reaktionsstöchiometrie bei der Reduktion der Stickoxide mit Wasserstoff, Kohlenmonoxid und Kohlenwasserstoffen zu Wasser, Kohlendioxid und Stickstoff und dem in der Motorelektronik für den augenblicklichen Betriebspunkt hinterlegten Abgasmassenstrom, der Temperatur und dem Gehalt an reduktiven Abgaskomponenten,
d) Überwachen der Luftzahl λ des Abgases hinter dem Speicherkatalysator während der Desorptionsphase und Messen der Desorptionsdauer T, nach der die Luftzahl unter einen vorgegebenen Grenzwert absinkt und erneutes Umschalten auf Luftzahlen über 1 oder Übergang zu einem anderen Betriebszustand,
e) Berechnen des unter Schritt b) verwendeten Korrekturfaktors K als Verhältnis aus der erwarteten Desorptionsdauer T_{D} und der gemessenen Desorptionsdauer T (K=T_{D}/T) und
f) zyklische Wiederholung der vorangegangenen Verfahrensschritte.

2. Verfahren nach Anspruch 1,
**dadurch gekennzeichnet,**
**daß** nach Überschreiten des Korrekturfaktors K über einen vorgegebenen Grenzwert ein Signal zum Austausch des geschädigten Speicherkatalysators gesetzt wird.

3. Verfahren nach Anspruch 2,
**dadurch gekennzeichnet,**
**daß** es sich bei dem Zielwert für die gespeicherte Menge an Stickoxiden gemäß Schritt b) um einen einmal fest vorgegebenen Wert handelt, welcher unterhalb der Speicherkapazität des Katalysators liegt.

4. Verfahren nach Anspruch 2,
**dadurch gekennzeichnet,**
**daß** es sich bei dem Zielwert für die gespeicherte Menge an Stickoxiden gemäß Schritt b) um die dem jeweiligen Betriebspunkt des Motors entsprechende nutzbare Speicherkapazität des Katalysators handelt.

5. Verfahren nach Anspruch 1,
**dadurch gekennzeichnet,**
**daß** nach Überschreiten des Korrekturfaktors von Schritt e) über den vorgegebenen Grenzwert eine thermische Desorption von adsorbierten Schwefelkomponenten bei Temperaturen über 600°C und bei Luftzahlen λ zwischen 0,95 und 1 für eine vorgegebene Zeitdauer eingeleitet wird, um die temporäre Schädigung des Speicherkatalysators durch adsorbierte Schwefelkomponenten rückgängig zu machen.

6. Verfahren nach Anspruch 5,
**dadurch gekennzeichnet,**
**daß** ein Signal zum Austausch des Speicherkatalysators gesetzt wird, wenn die thermische Desorption nach Anspruch 5 keine Verringerung des Korrekturfaktors erbringt.

7. Verfahren nach Anspruch 6,
**dadurch gekennzeichnet,**
**daß** es sich bei dem Zielwert für die gespeicherte Menge an Stickoxiden gemäß Schritt b) um einen einmal fest vorgegebenen Wert handelt, welcher unterhalb der Speicherkapazität des Katalysators liegt.

8. Verfahren nach Anspruch 6,
**dadurch gekennzeichnet,**
**daß** es sich bei dem Zielwert für die gespeicherte Menge an Stickoxiden gemäß Schritt b) um die dem jeweiligen Betriebspunkt des Motors entsprechende nutzbare Speicherkapazität des Katalysators handelt.

9. Verfahren nach einem der Ansprüche 1 bis 8,
**dadurch gekennzeichnet,**
**daß** die Luftzahl λ vor dem Speicherkatalysator während der Desorptionsphase auf einen Wert zwischen 0,6 und kleiner 1 eingeregelt wird.

10. Verfahren nach Anspruch 9,
**dadurch gekennzeichnet,**
**daß** die Abgaszusammensetzung hinter dem Speicherkatalysator mit einer Sprung-Lambdasonde gemessen und das Erreichen eines vorher festgelegten Abschaltwertes zum Beenden der Desorptionsphase genutzt wird.

11. Verfahren nach Anspruch 10,
**dadurch gekennzeichnet,**
**daß** der Korrekturfaktor K nach Beendigung des Motorbetriebs in der Motorelektronik für den nächsten Betrieb hinterlegt wird.

12. Verfahren nach Anspruch 9,
**dadurch gekennzeichnet,**
**daß** die Abgaszusammensetzung hinter dem Speicherkatalysator mit einem Kohlenwasserstoff- oder Kohlenmonoxidsensor gemessen und das Erreichen eines vorher festgelegten Abschaltwertes zum Beenden der Desorptionsphase genutzt wird.

13. Verfahren nach Anspruch 12,
**dadurch gekennzeichnet,**
**daß** der Korrekturfaktor K nach Beendigung des Motorbetriebs in der Motorelektronik für den nächsten Betrieb hinterlegt wird.

## Claims

1. A method for operating a nitrogen oxide storage catalyst with cyclical change of air ratios of the exhaust gas over 1 (sorption phase) to air ratios under 1 (desorption and conversion phase) for reducing the nitrogen oxides stored on the catalyst during the sorption phase and released from the storage catalyst during the desorption phase using the reductive exhaust gas components emitted by an internal-combustion engine during the desorption phase, the method comprising the following steps:
a) computed integration over time of the amount M of nitrogen oxides theoretically adsorbed on the storage catalyst during the sorption phase at an air ratio greater than 1, using the temperature-dependent storage capacity of the catalyst filed in the engine electronics and the amount of the nitrogen oxides also filed in the engine electronics which is emitted at every operating point of the engine (torque, number of revolutions, air ratio),
b) reduction of the air ratio for desorption and reaction of the nitrogen oxides to a value under 1 after attaining a target value for the theoretically stored amount M of nitrogen oxides multiplied by a correction factor K (K•M,), the correction factor being taken from the motor electronics after a restart of the internal-combustion engine and continuously actualised throughout the continuous operation of the internal-combustion engine in step e);
c) calculation of the expected duration of the desorption phase T_{D} from the target value for the stored nitrogen oxides and from the oxygen stored in the exhaust gas purification system taking account of the reaction stoichiometry of the reduction of nitrogen oxides with hydrogen, carbon monoxide and hydrocarbon into water, carbon dioxide and nitrogen and of the exhaust gas mass stream, the temperature and the content of reductive exhaust gas components filed in the engine electronics for the current operating point,
d) monitoring of the air ratio λ of the exhaust gas downstream from the storage catalyst during the desorption phase and measurement of the time duration T of the desorption after which the air ratio falls below a predetermined threshold and renewed switching to air ratios over 1 or transition to another operational state,
e) calculation of the correction factor K used in step b) as a ratio of the anticipated desorption duration T_{D} and of the measured desorption duration T (K=T_{D}/T) and
f) cyclic repetition of the preceding method steps.

2. The method according to Claim 1,
**characterised in that**,
a signal to exchange the damaged storage catalyst is given after the correction factor K has exceeded a given threshold.

3. The method according to Claim 2,
**characterised in that**,
the target value for the stored amount of nitrogen oxides according to step b) is a predetermined constant value that lies below the storage capacity of the catalyst.

4. The method according to Claim 2,
**characterised in that**,
the target value for the stored amount of nitrogen oxides according to step b) is the storage capacity of the catalyst corresponding to the respective operating point of the engine.

5. The method according to Claim 1,
**characterised in that**,
that after the correction factor of step e) has exceeded the predetermined threshold a thermic desorption of adsorbed sulphur components is initiated at temperatures above 600°C and at air ratios λ between 0.95 and 1 for a predetermined time duration in order to reverse the temporary damage of the storage catalyst by adsorbed sulphur components.

6. The method according to Claim 5,
**characterised in that**,
a signal to exchange the storage catalyst is given when the thermic desorption according to Claim 5 does not reduce the correction factor.

7. The method according to Claim 6,
**characterised in that**,
the target value for the stored amount of nitrogen oxides according to step b) is a predetermined constant value that lies below the storage capacity of the catalyst.

8. The method according to Claim 6,
**characterised in that**,
the target value for the stored amount of nitrogen oxides according to step b) is the storage capacity of the catalyst corresponding to the respective operating point of the engine.

9. The method according to any one of Claims 1 to 8,
**characterised in that**,
the air ratio λ upstream from the storage catalyst is set to a value between 0.6 and less than 1 during the desorption phase.

10. The method according to Claim 9,
**characterised in that**,
the exhaust gas composition downstream from the storage catalyst is measured using a two-point lambda probe and the attainment of a predetermined stopping value used to stop the desorption phase.

11. The method according to Claim 10,
**characterised in that**,
the correction factor K is filed in the engine electronics for the next operation when the engine stops operating.

12. The method according to Claim 9,
**characterised in that**,
the exhaust gas composition downstream from the storage catalyst is measured using a hydrocarbon or carbon monoxide sensor and the attainment of a defined sensor signal is used to stop the desorption phase.

13. The method according to Claim 12,
**characterised in that**,
the correction factor K is filed in the engine electronics for the next operation when the engine stops operating.

## Revendications

1. Procédé de fonctionnement d'un catalyseur d'accumulation d'oxyde d'azote avec alternance cyclique des coefficients d'air des gaz d'échappement au-dessus de 1 (phase de sorption) et des coefficients d'air au-dessous de 1 (phase de désorption et de conversion) permettant la réduction des oxydes d'azote accumulés dans le catalyseur pendant la phase de sorption et libérés pendant la phase de désorption dans le catalyseur d'accumulation, en utilisant des constituants réducteurs des gaz d'échappement émis par un moteur à combustion pendant la phase de désorption,
**caractérisé par** les étapes suivantes :
a) Intégration mathématique de la quantité M d'oxydes d'azote théoriquement absorbante sur le catalyseur d'accumulation pendant la phase de sorption à un coefficient d'air supérieur à 1 dans le temps en utilisant de la capacité d'accumulation du catalyseur dépendante de la température enregistrée dans l'électronique du moteur et la quantité d'oxydes d'azote également enregistrée dans l'électronique du moteur, quantité qui est émise à chaque point de fonctionnement du moteur (couple, vitesse, coefficient d'air),
b) abaissement du coefficient d'air permettant la désorption et la conversion des oxydes d'azote à une valeur inférieure à 1 après l'atteinte d'une valeur cible pour la quantité M d'oxydes d'azote (K•M) théoriquement enregistrée, multipliée par un facteur de correction K, le facteur de correction étant extrait de l'électronique du moteur après le redémarrage du moteur à combustion et actualisé en permanence pendant le fonctionnement continu du moteur à combustion à l'étape (e),
c) calcul de la durée attendue de la phase de désorption T_{D} à partir de la valeur cible des oxydes d'azote accumulés et de l'oxygène accumulé dans le système d'épuration des gaz d'échappement compte tenu de la stoechiométrie réactionnelle lors de la réduction des oxydes d'azote avec de l'hydrogène, du monoxyde de carbone et des hydrocarbures en eau, dioxyde de carbone et azote et du flux massique de gaz d'échappement enregistré dans l'électronique du moteur pour le point de fonctionnement du moment, de la température et de la teneur en composants réducteurs des gaz d'échappement,
d) surveillance du coefficient d'air λ des gaz d'échappement en aval du catalyseur d'accumulation pendant la phase de désorption et mesure de la durée de désorption T après laquelle le coefficient d'air baisse au-dessous d'une valeur limite prédéfinie et nouveau basculement à des coefficients d'air au-dessus de 1 ou passage à un autre état de fonctionnement,
e) calcul du facteur de correction K utilisé à l'étape b) en tant que rapport entre la durée de désorption T_{D} attendue et la durée de désorption T mesurée (K=T_{D}/T) et
f) répétition cyclique des étapes précédentes.

2. Procédé selon la revendication 1,
**caractérisé en ce que**
après un dépassement du facteur de correction K au-delà d'une valeur limite prédéfinie, un signal est émis pour le remplacement du catalyseur d'accumulation endommagé.

3. Procédé selon la revendication 2,
**caractérisé en ce que**
la valeur cible de la quantité d'oxydes d'azote accumulée selon l'étape b) est une valeur prédéfinie une fois pour toutes qui est inférieure à la capacité d'accumulation du catalyseur.

4. Procédé selon la revendication 2,
**caractérisé en ce que**
la valeur cible de la quantité d'oxydes d'azote accumulée selon l'étape b) est la capacité d'accumulation du catalyseur utilisable correspondant au point de fonctionnement concerné du moteur.

5. Procédé selon la revendication 1,
**caractérisé en ce qu'**
après un dépassement du facteur de correction de l'étape (e) au-delà de la valeur limite prédéfinie, une désorption thermique des composants de soufre adsorbés est initiée pour une durée prédéfinie à des températures supérieures à 600°C et à des coefficients d'air λ entre 0,95 et 1 pour annuler la détérioration temporaire du catalyseur d'absorption par des composants de soufre adsorbés.

6. Procédé selon la revendication 5,
**caractérisé en ce qu'**
un signal est émis pour le remplacement du catalyseur d'accumulation lorsque la désorption thermique selon la revendication 5 n'apporte pas de réduction du facteur de correction.

7. Procédé selon la revendication 6,
**caractérisé en ce que**
la valeur cible de la quantité accumulée d'oxydes d'azote selon l'étape b) est une valeur prédéfinie une fois pour toutes qui est inférieure à la capacité d'accumulation du catalyseur.

8. Procédé selon la revendication 6,
**caractérisé en ce que**
la valeur cible de la quantité accumulée d'oxydes d'azote selon l'étape b) est la capacité d'accumulation du catalyseur utilisable correspondant au point de fonctionnement concerné du moteur.

9. Procédé selon l'une quelconque des revendications 1 à 8,
**caractérisé en ce que**
le coefficient d'air λ avant le catalyseur d'accumulation est réglé sur une valeur comprise entre 0,6 et moins de 1 pendant la phase de désorption.

10. Procédé selon la revendication 9,
**caractérisé en ce que**
la composition des gaz d'échappement est mesurée après le catalyseur d'accumulation avec une sonde lambda et l'atteinte d'une valeur de déconnexion préalablement définie est utilisée pour terminer la phase de désorption.

11. Procédé selon la revendication 10,
**caractérisé en ce que**
le facteur de correction K est enregistré dans l'électronique du moteur à l'issue du fonctionnement du moteur pour le fonctionnement suivant.

12. Procédé selon la revendication 9,
**caractérisé en ce que**
la composition des gaz d'échappement après le catalyseur d'accumulation est mesurée avec un capteur à hydrocarbure ou à monoxyde de carbone et l'atteinte d'une valeur de déconnexion préalablement fixée est utilisée pour terminer la phase de désorption.

13. Procédé selon la revendication 12,
**caractérisé en ce que**
le facteur de correction K est enregistré dans l'électronique du moteur à l'issue du fonctionnement du moteur pour le fonctionnement suivant.
